# EUROPEAN PATENT APPLICATION

(11) **EP 4 215 781 A1**
(43) Date of publication of application: **26.07.2023**
(21) Application number: 23151693.1
(22) Date of filing: 16.01.2023
(51) Int. Cl.: F16K 1/38, F16K 31/04, F16K 1/54, F25B 41/35

(54) **ELECTRIC-OPERATED VALVE**

(30) Priority: 19.01.2022 JP 2022006318
(71) Applicant: Fujikoki Corporation, Tokyo 158-0082 (JP)
(72) Inventor: YAZAWA, Masashi, Tokyo, 158-0082 (JP); SUGANUMA, Takeshi, Tokyo, 158-0082 (JP)
(74) Representative: Ter Meer Steinmeister & Partner

(57) **Abstract**

In an electric-operated valve (1), when a rotor (41) is at a reference position, a valve member (30) is in contact with a valve seat (18). When the rotor is at a valve opening position where the valve member separates from the valve seat, a minimum throttle passage (38) is formed between a lower end (36b) of the intermediate portion (36) and an orifice portion (17a). D represents a tolerance range of the number of pulses input to a stepping motor (66) while the rotor rotates from the reference position to the valve opening position, and a distance between the lower end of the intermediate portion and an upper end (17a1) of the orifice portion when the valve member is in contact with the valve seat is greater than or equal to a moving distance of the valve member corresponding to D + 1 pulses.

## Description

### BACKGROUND OF THE INVENTION

### 1. Field of the Invention

The present invention relates to an electric-operated valve.

### 2. Description of the Related Art

Japanese Unexamined Patent Application Publication No.2011-208716 discloses an example of an electric-operated valve according to the related art. The electric-operated valve is installed in a refrigeration cycle of an air conditioner or the like. The electric-operated valve includes a valve body, a valve member, and a stepping motor for moving the valve member. The stepping motor includes a rotor and a stator. The rotor rotates in response to pulses input to the stepping motor. The valve member moves along with the rotation of the rotor, and the movement of the valve member changes an opening degree of a valve port of the valve body. When the rotor rotates in a first direction, the valve member moves toward the valve port, and the opening degree of the valve port decreases. When the rotor rotates in a second direction, the valve member moves away from the valve port, and the opening degree of the valve port increases. When the rotor is at a reference position, a movable stopper mounted to the rotor is in contact with a fixed stopper mounted to the valve body, and the rotation of the rotor in the first direction is restricted.

The electric-operated valve is controlled by an electric-operated valve control unit. The electric-operated valve control unit, in an initialization operation, inputs pulses to the stepping motor to rotate the rotor in the first direction and position the rotor at the reference position. Next, the electric-operated valve control unit inputs pulses to the stepping motor to rotate the rotor in the second direction and position the rotor at a valve opening position. When the rotor is positioned at the valve opening position, a flow rate of fluid flowing through the valve port is at a minimum throttle flow rate.

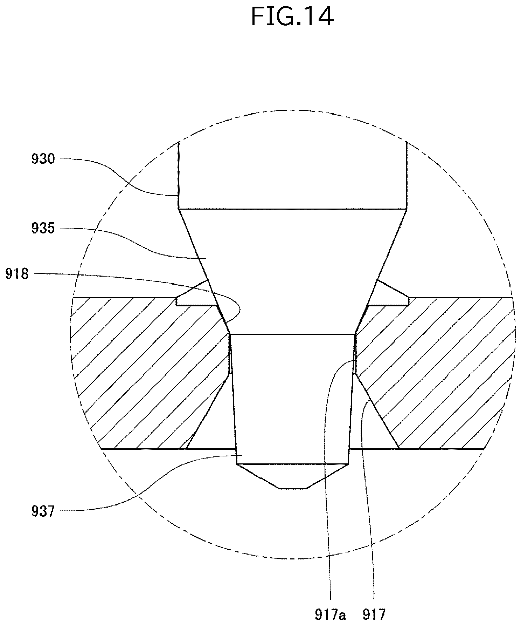

Fig. 14 illustrates an example of the valve member of the electric-operated valve according to the related art.
A valve member 930 illustrated in Fig 14 includes a seating portion 935 and a tip portion 937. The seating portion 935 has a tapered shape with an outer diameter decreasing from the upper end to the lower end. The tip portion 937 is connected to the lower end of the seating portion 935. The tip portion 937 has a tapered shape with an outer diameter decreasing from the upper end to the lower end. A valve port 917 includes an orifice portion 917a with a constant inner diameter.

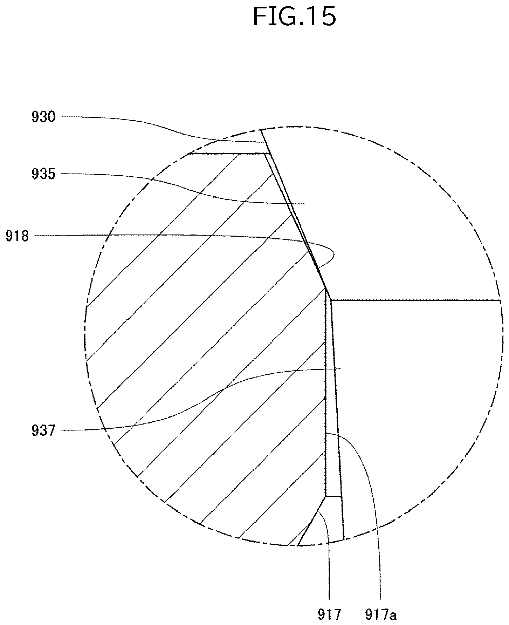

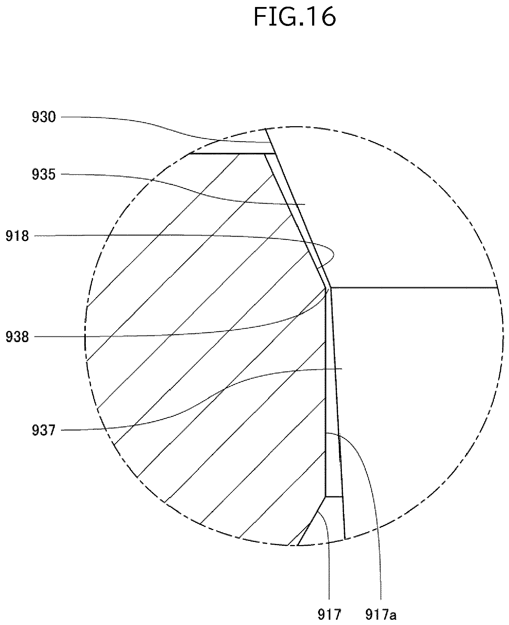

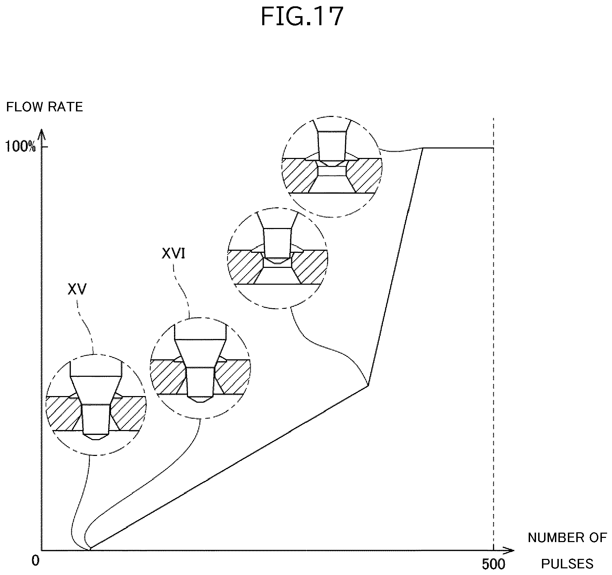

When the rotor of the electric-operated valve is at the reference position, the seating portion 935 is in contact with a valve seat 918, and the tip portion 937 is in the valve port 917. At this time, no fluid flows through the valve port 917. Next, when pulses are input to the stepping motor to rotate the rotor from the reference position to the valve opening position, the seating portion 935 separates from the valve seat 918, and a minimum throttle passage 938 is formed between the tip portion 937 and the orifice portion 917a. Specifically, when the rotor is positioned from the reference position to a position immediately before the valve opening position, as illustrated in Fig. 15, the seating portion 935 is in contact with the valve seat 918. When one pulse is input to the stepping motor with the rotor at the position immediately before the valve opening position, the rotor is positioned at the valve opening position, and as illustrated in Fig. 16, the seating portion 935 separates from the valve seat 918. The minimum throttle passage 938 is formed, and the flow rate of the fluid flowing through the valve port 917 is at the minimum throttle flow rate. When the rotor at the valve opening position further rotates in the second direction, the valve member 930 moves away from the valve port 917, and the flow rate of the fluid flowing through the valve port 917 increases linearly. Fig. 17 illustrates a graph showing an example of the relationship between the number of pulses input to the stepping motor and the flow rate of the fluid flowing through the valve port 917 in the electric-operated valve according to the related art. Positional relationships between the valve port 917 and the valve member 930 at some points on the graph are illustrated within circles of dashed lines in Fig. 17. Fig. 15 is an enlarged view of a part of the circle denoted by XV in Fig. 17. Fig. 16 is an enlarged view of a part of the circle denoted by XVI in Fig. 17.

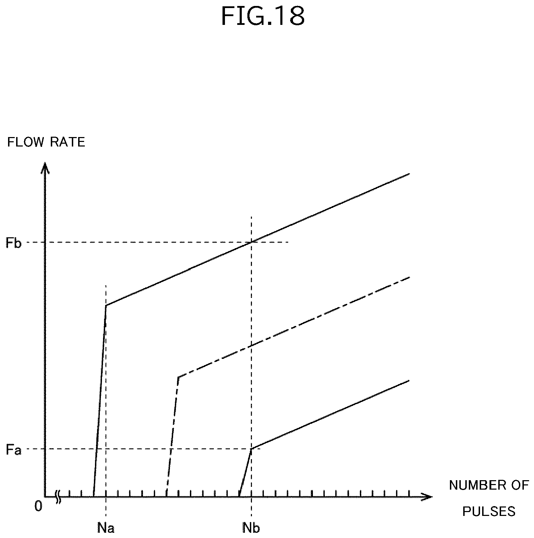

Electric-operated valves are manufactured so that the flow rates of the fluid flowing through the valve ports 917 of the electric-operated valves are equal when the numbers of pulses input to the stepping motors of the electric-operated valves are equal. However, depending on component accuracy or assembly accuracy, the flow rates of the fluid flowing through the valve ports 917 may vary among the electric-operated valves. In addition, the numbers of pulses (valve opening pulse numbers C) input to the stepping motors to rotate the rotors from the reference position to the valve opening position may also vary among the electric-operated valves. Fig. 18 illustrates a graph showing an example of the tolerance range of the flow rate of the fluid flowing through the valve port 917 with respect to the number of pulses input to the stepping motor. The graph in Fig. 18 shows the relationship between the number of pulses input to the stepping motor and the flow rate of the fluid flowing through the valve port 917 when the rotor of the electric-operated valve is at the valve opening position or in the vicinity of the valve opening position. In Fig. 18, a range from a lower-limit number Na to an upper-limit number Nb is an example of the tolerance range of the valve opening pulse number C.

However, when the rotor at the valve opening position further rotates in the second direction, the flow rate of the fluid flowing through the valve port 917 linearly increases, resulting in a larger variation range (from lower-limit value Fa to upper-limit value Fb) of the minimum throttle flow rate.

### SUMMARY OF THE INVENTION

Accordingly, it is an object of the present invention to provide an electric-operated valve capable of decreasing the variation range of the minimum throttle flow rate.

To achieve the object described above, an electric-operated valve according to an aspect of the present invention includes a valve body including a valve port and a valve seat, a stepping motor including a rotor, a valve member that moves toward the valve port when the rotor rotates in a first direction and moves away from the valve port when the rotor rotates in a second direction, and a stopper mechanism that restricts rotation of the rotor in the first direction when the rotor is at a reference position. The valve port includes an orifice portion with a constant inner diameter. The valve seat is disposed around one end of the orifice portion. The valve member includes a seating portion, an intermediate portion, and a tip portion. A first end of the intermediate portion is connected to the seating portion. A second end of the intermediate portion is connected to the tip portion. An outer diameter at the second end of the intermediate portion is larger than an outer diameter of the tip portion. When the rotor is at the reference position, the seating portion is in contact with the valve seat, and the second end of the intermediate portion is in the valve port. A position of the rotor when the rotor rotates in the second direction and the seating portion separates from the valve seat is a valve opening position. When the rotor is at the valve opening position, a minimum throttle passage is formed between the second end of the intermediate portion and the orifice portion. D represents the tolerance range of the number of pulses input to the stepping motor while the rotor rotates from the reference position to the valve opening position, and a distance between the second end of the intermediate portion and the one end of the orifice portion when the seating portion is in contact with the valve seat, the distance being referred to as minimum throttle passage distance, is greater than or equal to a moving distance of the valve member corresponding to D + 1 pulses.

In the present invention, preferably, the minimum throttle passage distance is a moving distance of the valve member corresponding to 1 to 15% of the number of pulses input to the stepping motor while the rotor rotates from the reference position to a full-open position where the valve member is farthest from the valve port.

In the present invention, preferably, the intermediate portion includes at least one portion in a columnar shape with a constant outer diameter.

In the present invention, preferably, the intermediate portion includes at least one portion with an annular groove on its outer circumferential surface.

According to the present invention, the valve port includes the orifice portion with the constant inner diameter. The valve seat is disposed around the one end of the orifice portion. The valve member includes the seating portion, the intermediate portion, and the tip portion. The first end of the intermediate portion is connected to the seating portion. The second end of the intermediate portion is connected to the tip portion. The outer diameter of the second end of the intermediate portion is larger than the outer diameter of the tip portion. When the rotor is at the reference position, the seating portion is in contact with the valve seat, and the second end of the intermediate portion is in the valve port. The position of the rotor when the rotor rotates in the second direction and the seating portion separates from the valve seat is the valve opening position. When the rotor is at the valve opening position, the minimum throttle passage is formed between the second end of the intermediate portion and the orifice portion. D represents the tolerance range of the number of pulses input to the stepping motor (hereinafter referred to as "valve opening pulse number") while the rotor rotates from the reference position to the valve opening position, and the minimum throttle passage distance is greater than or equal to the moving distance of the valve member corresponding to D + 1 pulses.

As a result, in the electric-operated valve with the valve opening pulse number which is equal to an upper-limit number Nb of the tolerance range, when the number of pulses input to the stepping motor with the rotor at the reference position is between Nb and Nb + D, the minimum throttle passage is formed. In the electric-operated valve with the valve opening pulse number which is equal to the lower-limit number Na of the tolerance range, when the number of pulses input to the stepping motor with the rotor at the reference position is between Na and Na + D, the minimum throttle passage is formed. Since D (D = Nb - Na) represents the tolerance range, Na + D = Nb holds. Thus, by using the valve opening pulse number, which is equal to the upper-limit number Nb, in an initialization operation of the electric-operated valves, a flow rate of fluid flowing through the valve port can be set to the minimum throttle flow rate in any of the electric-operated valves. Accordingly, in the electric-operated valves, the variation range of the minimum throttle flow rates can be decreased.

### BRIEF DESCRIPTION OF THE DRAWINGS

Fig. 1 is a sectional view of an electric-operated valve according to an embodiment of the present invention.
Fig. 2 is a sectional view of a valve body assembly of the electric-operated valve in Fig. 1.
Fig. 3 is a plan view of a valve stem holder, a stopper member, a rotor, and a stator of the electric-operated valve in Fig. 1.
Fig. 4A and Fig. 4B are diagrams concerning a stepping motor of the electric-operated valve in Fig. 1.
Fig. 5 is a sectional view of a valve member and members in its vicinity of the electric-operated valve in Fig. 1.
Fig. 6 is an enlarged sectional view of the valve member and the members in its vicinity of the electric-operated valve in Fig. 1 (in a state where a seating portion of the valve member is in contact with a valve seat).
Fig. 7 is an enlarged sectional view of the valve member and the members in its vicinity of the electric-operated valve in Fig. 1 (in a state immediately after the seating portion of the valve member separates from the valve seat).
Fig. 8 is an enlarged sectional view of the valve member and the members in its vicinity of the electric-operated valve in Fig. 1 (in a state where a lower end of an intermediate portion of the valve member and an upper end of the orifice portion of a valve port are at the same position in a direction of an axis).
Fig. 9 is a graph showing an example of the relationship between the number of pulses input to the stepping motor and a flow rate of fluid flowing through the valve port in the electric-operated valve in Fig. 1.
Fig. 10 is a graph showing an example of the tolerance range of the flow rate of the fluid flowing through the valve port with respect to the number of pulses input to the stepping motor in the electric-operated valve in Fig. 1.
Fig. 11 is a sectional view of a first modification of the valve member in Fig. 5.
Fig. 12 is a sectional view of a second modification of the valve member in Fig. 5.
Fig. 13 is a sectional view of a third modification of the valve member in Fig. 5.
Fig. 14 is a sectional view of a valve member and members in its vicinity of an electric-operated valve according to the related art.
Fig. 15 is an enlarged sectional view of the valve member and the members in its vicinity in Fig. 14 (in a state where a seating portion of the valve member is in contact with a valve seat).
Fig. 16 is an enlarged sectional view of the valve member and the members in its vicinity in Fig. 14 (in a state immediately after the seating portion of the valve member separates from the valve seat).
Fig. 17 is a graph showing an example of the relationship between the number of pulses input to a stepping motor and a flow rate of fluid flowing through a valve port in the electric-operated valve according to the related art.
Fig. 18 is a graph showing an example of the tolerance range of the flow rate of the fluid flowing through the valve port with respect to the number of pulses input to the stepping motor in the electric-operated valve according to the related art.

### DESCRIPTION OF THE PREFERRED EMBODIMENTS

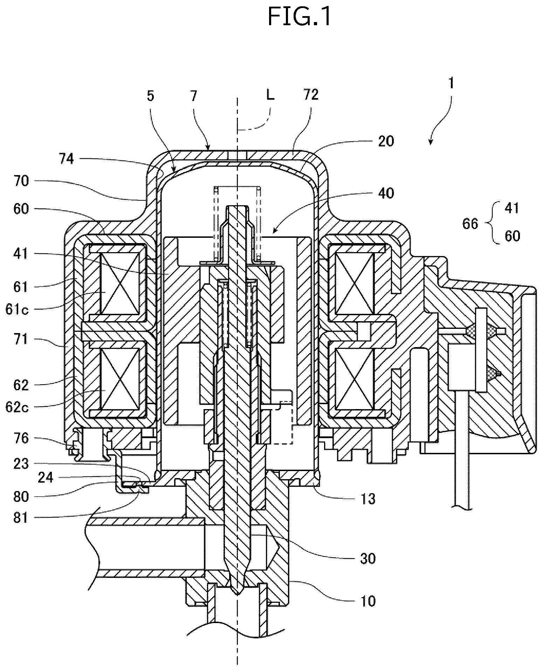

An electric-operated valve according to an embodiment of the present invention is described below with reference to Fig. 1 to Fig. 13.

An electric-operated valve according to the present embodiment is, for example, used as a flow control valve for controlling the flow rate of refrigerant in a refrigeration cycle of an air conditioner.

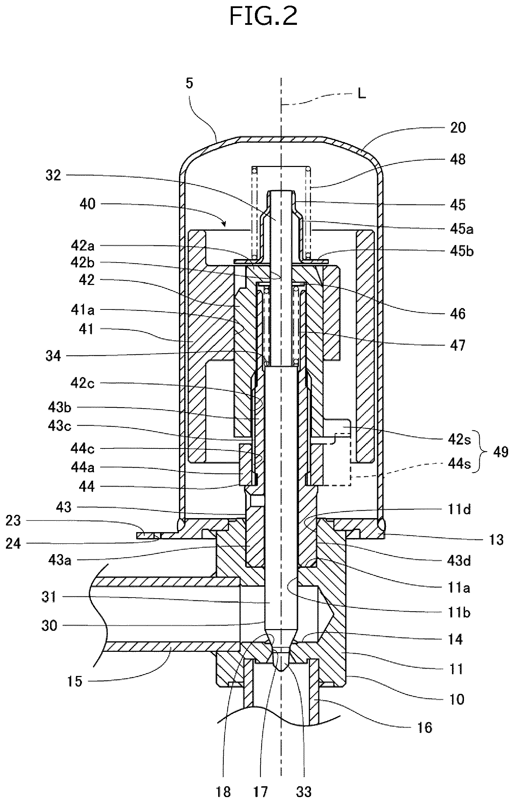

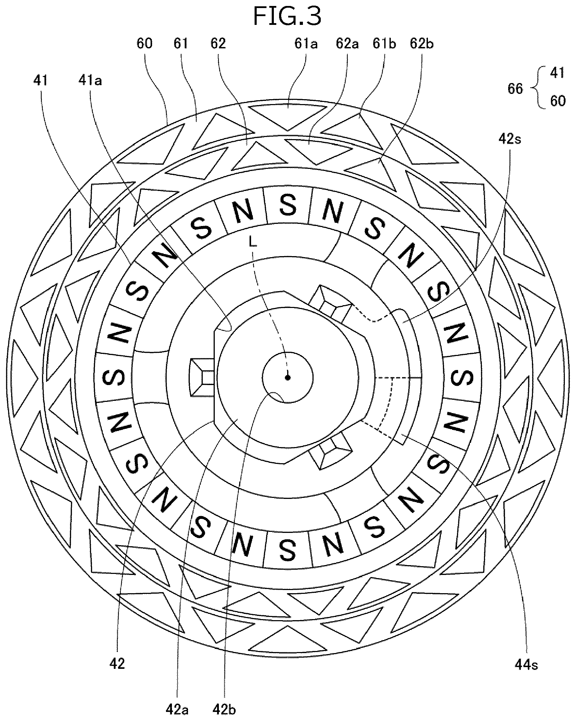

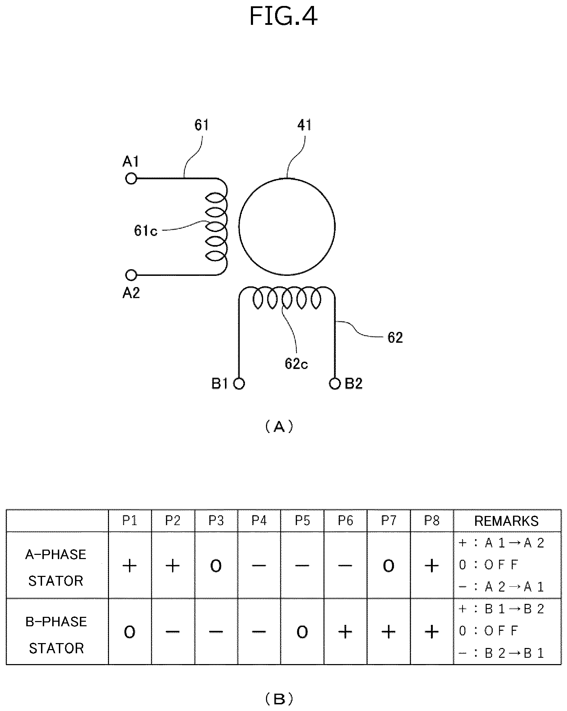

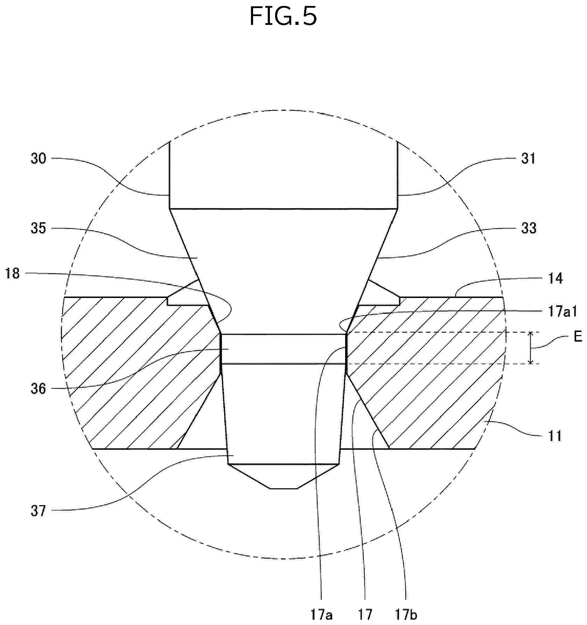

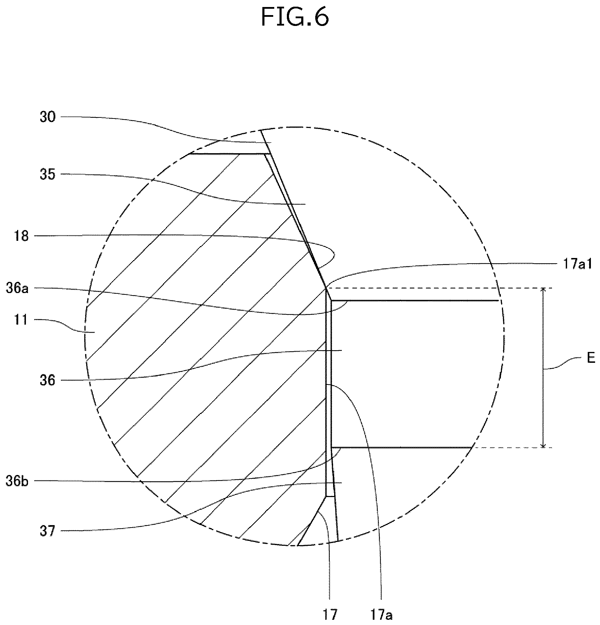

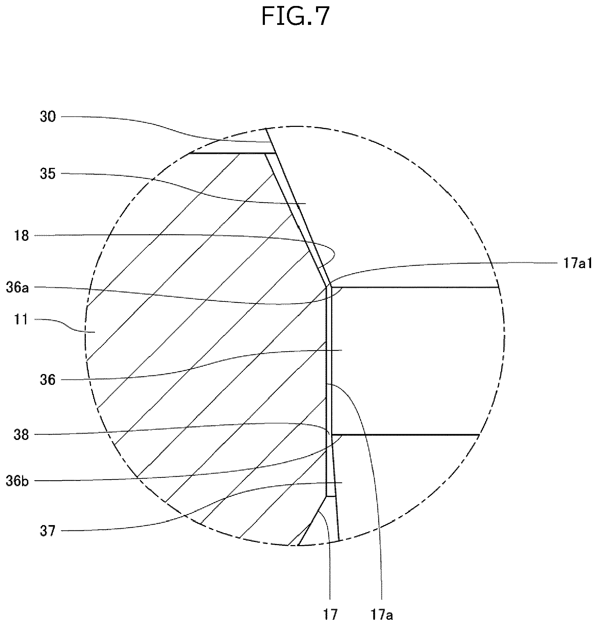

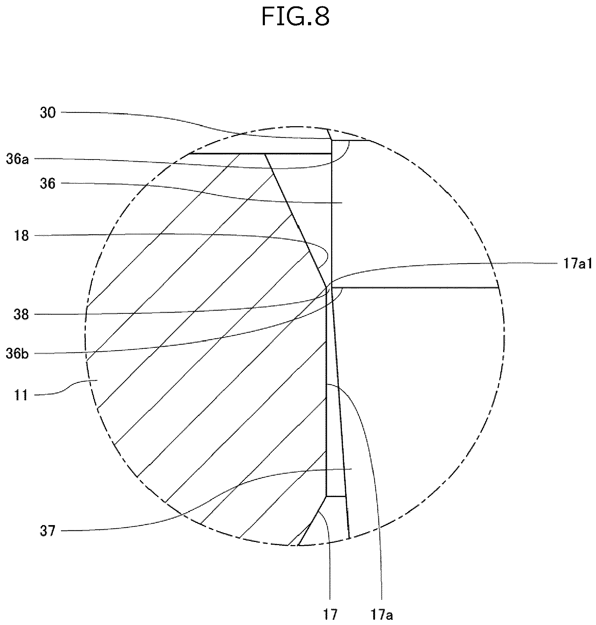

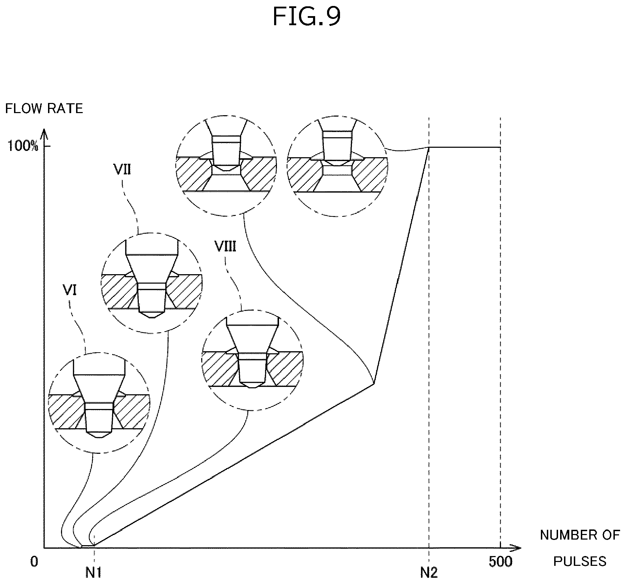

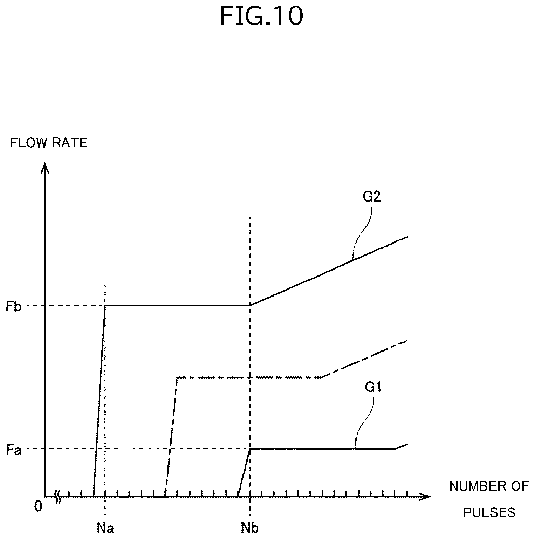

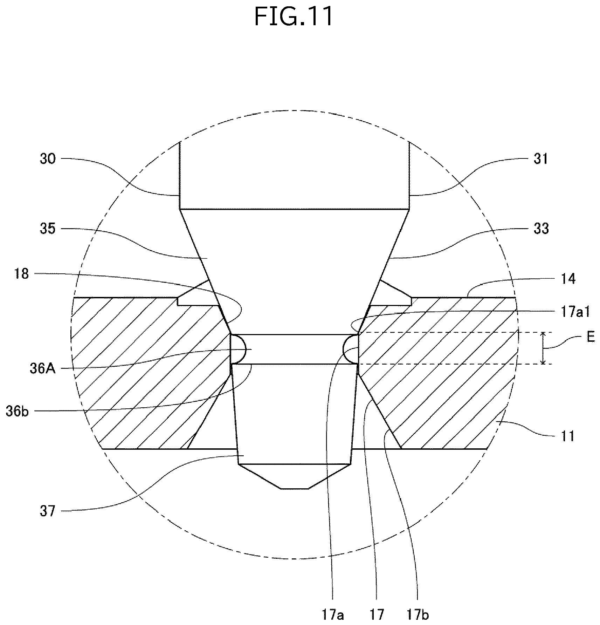

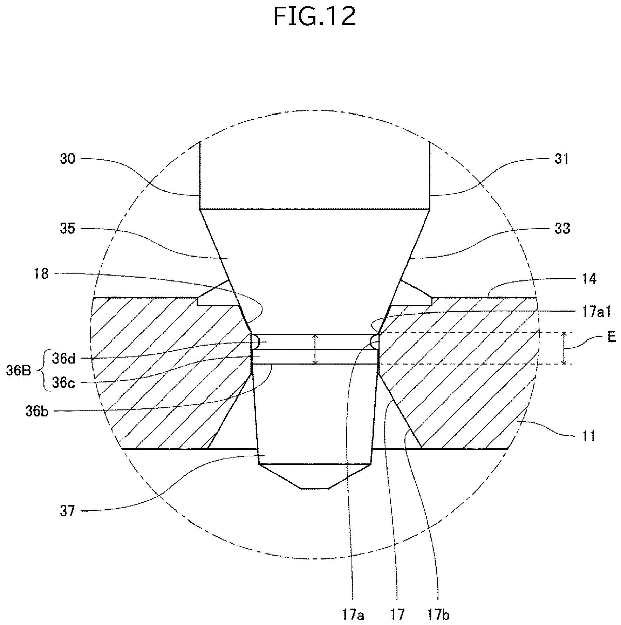

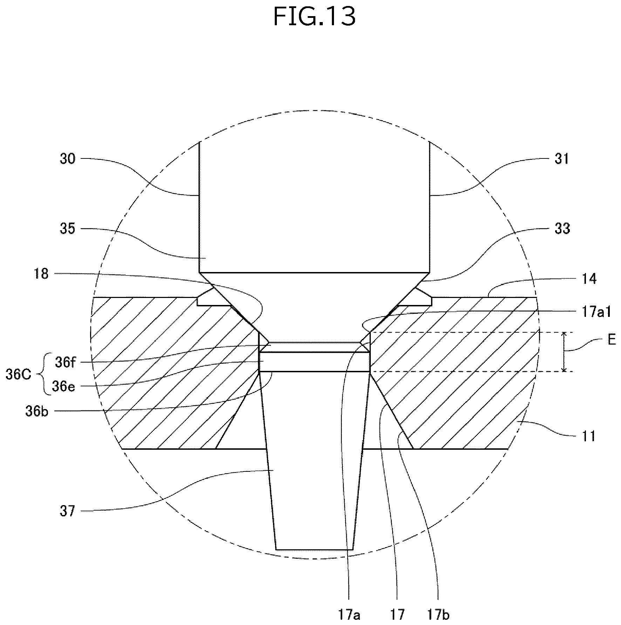

Fig. 1 is a sectional view of an electric-operated valve according to the embodiment of the present invention. Fig. 2 is a sectional view of a valve body assembly of the electric-operated valve in Fig. 1. Fig. 3 is a plan view of a valve stem holder, a stopper member, a rotor, and a stator of the electric-operated valve in Fig. 1. Fig. 3 schematically illustrates the stator. Fig. 3 schematically illustrates magnetic poles of the rotor. Fig. 4A and Fig. 4B are diagrams illustrating a stepping motor of the electric-operated valve in Fig. 1. Fig. 4A schematically illustrates the rotor and coils of the stator. Fig. 4B illustrates an example of the correspondence between pulses and drive currents supplied to the stator. Fig. 5 is a sectional view of a valve member and members in its vicinity of the electric-operated valve in Fig. 1. Fig. 6 to Fig. 8 are enlarged sectional views of the valve member and the members in its vicinity of the electric-operated valve in Fig. 1. Fig. 6 illustrates the valve member and members in a state where a seating portion of the valve member is in contact with a valve seat. Fig. 7 illustrates the valve member and members in a state immediately after the seating portion of the valve member separates from the valve seat (a state where the rotor is at a valve opening position). Fig. 8 illustrates the valve member and members in a state where a lower end of an intermediate portion of the valve member and an upper end of an orifice portion of a valve port are at the same position in a direction of an axis. Fig. 9 is a graph showing an example of the relationship between the number of pulses input to the stepping motor and a flow rate of fluid flowing through the valve port in the electric-operated valve in Fig. 1. Fig. 10 is a graph showing an example of the tolerance range of the flow rate of the fluid flowing through the valve port with respect to the number of pulses input to the stepping motor in the electric-operated valve in Fig. 1. Fig. 11 is a sectional view of a first modification of the valve member in Fig. 5. Fig. 12 is a sectional view of a second modification of the valve member in Fig. 5. Fig. 13 is a sectional view of a third modification of the valve member in Fig. 5. In Fig. 2, Fig. 5 to Fig. 8, and Fig. 11 to Fig. 13, the valve member is illustrated in front view.

As illustrated in Fig. 1, an electric-operated valve 1 according to the present embodiment includes a valve body assembly 5 and a stator unit 7.

As illustrated in Fig. 2, the valve body assembly 5 includes a valve body 10, a can 20, a fitting plate 23, a valve member 30, and a driving section 40.

The valve body 10 includes a body member 11 and a connection member 13. The body member 11 has a columnar shape. The body member 11 includes a valve chamber 14. A first conduit 15 and a second conduit 16 are bonded to the body member 11. The first conduit 15 is disposed in a direction (lateral direction in Fig. 2) perpendicular to an axis L and is connected to the valve chamber 14. The second conduit 16 is disposed in a direction of the axis L (up-down direction in Fig. 2) and is connected to the valve chamber 14 via a valve port 17. The valve port 17 is enclosed by a valve seat 18, which has an annular tapered shape, in the valve chamber 14. The body member 11 has a fitting hole 11a in a circular shape. The fitting hole 11a is in the upper end surface of the body member 11. The inner circumferential surface of the fitting hole 11a has a planar surface 11d facing leftward in Fig. 2. A stem hole 11b communicating with the valve chamber 14 is provided at the bottom of the fitting hole 11a. The connection member 13 has an annular plate-like shape. The inner circumferential edge of the connection member 13 is bonded to the upper portion of the body member 11. The body member 11 and the connection member 13 are made of metal, such as an aluminum alloy, stainless steel, or brass.

As illustrated in Fig. 5, the valve port 17 includes an orifice portion 17a and a flow guide portion 17b. An upper end 17a1 (one end) of the orifice portion 17a is connected to the inner circumferential edge of the valve seat 18. The valve seat 18 encloses the upper end 17a1 of the orifice portion 17a. The orifice portion 17a has a constant inner diameter throughout the orifice portion 17a in the direction of the axis L. The upper end of the flow guide portion 17b is connected to the lower end of the orifice portion 17a. The flow guide portion 17b has a tapered shape with an inner diameter increasing from the upper end to the lower end.
The flow guide portion 17b guides fluid in the orifice portion 17a to the second conduit 16 and guides fluid in the second conduit 16 to the orifice portion 17a.

As illustrated in Fig. 2, the can 20 has a cylindrical shape. The can 20 is made of metal, such as stainless steel. The can 20 is open at the lower end and is closed at the upper end. The lower end of the can 20 is bonded to the outer circumferential edge of the connection member 13.

The fitting plate 23 has an arc shape. The inner edge of the fitting plate 23 is connected to the outer circumferential edge of the connection member 13. The connection member 13 and the fitting plate 23 constitute a single component. The axis L passes through the center of the arc of the fitting plate 23 and the center of the connection member 13. The fitting plate 23 protrudes from the connection member 13 outward in the radial direction. The fitting plate 23 has a hole 24. The hole 24 has a circular shape and extends through the fitting plate 23.

The valve member 30 includes a first stem portion 31, a second stem portion 32, and a valve portion 33. The first stem portion 31 has a columnar shape. The second stem portion 32 has a columnar shape. The diameter of the second stem portion 32 is smaller than the diameter of the first stem portion 31. The second stem portion 32 is coaxially connected to the upper end of the first stem portion 31.
The valve member 30 has a step portion 34. The step portion 34 is an annular plane facing upward. The step portion 34 is disposed in the connecting part of the valve member 30 in which the second stem portion 32 is connected to the first stem portion 31. The valve portion 33 is coaxially connected to the lower end of the first stem portion 31. The valve portion 33 faces the valve seat 18. The valve port 17 closes when the valve portion 33 comes into contact with the valve seat 18.

As illustrated in Fig. 5, the valve portion 33 includes a seating portion 35, an intermediate portion 36, and a tip portion 37. The seating portion 35, the intermediate portion 36, and the tip portion 37 are arranged in this order in the direction of the axis L.

The seating portion 35 has a tapered shape with an outer diameter decreasing from the upper end to the lower end. The upper end of the seating portion 35 is coaxially connected to the lower end of the first stem portion 31.

The intermediate portion 36 has a columnar shape. The intermediate portion 36 has a constant outer diameter throughout the intermediate portion 36 in the direction of the axis L. An upper end 36a (first end) of the intermediate portion 36 is coaxially connected to the lower end of the seating portion 35. The outer diameter of the intermediate portion 36 is slightly smaller than the inner diameter of the orifice portion 17a. The length of the intermediate portion 36 in the direction of the axis L is shorter than the length of the orifice portion 17a in the direction of the axis L. An outer diameter of a lower end 36b (second end) of the intermediate portion 36 may be larger than the outer diameter of the portion of the intermediate portion 36 other than the lower end 36b.

The tip portion 37 has a tapered shape with an outer diameter decreasing from the upper end to the lower end. In this embodiment, the tip portion 37 has a two-stage tapered shape with a portion having a small cone angle and a portion having a large cone angle. The tip portion 37 may have a semi-ellipsoidal shape with an outer diameter decreasing from the upper end to the lower end. The upper end of the tip portion 37 is coaxially connected to the lower end 36b of the intermediate portion 36. The outer diameter of any part of the tip portion 37 is smaller than the outer diameter of the lower end 36b of the intermediate portion 36.

The driving section 40 moves the valve member 30 in the direction of the axis L. The movement of the valve member 30 opens and closes the valve port 17. As illustrated in Figs. 2 and 3, the driving section 40 includes a rotor 41, a valve stem holder 42, a guide bush 43, a stopper member 44, and a fixed member 45.

The rotor 41 has a cylindrical shape. The outer diameter of the rotor 41 is slightly smaller than the inner diameter of the can 20. The rotor 41 is disposed in the can 20. The rotor 41 is rotatable with respect to the valve body 10. The rotor 41 has a plurality of north (N) poles and a plurality of south (S) poles. The N poles and the S poles are disposed on the outer circumferential surface of the rotor 41. The N poles and the S poles extend in the direction of the axis L. The N poles and the S poles are alternately arranged in the circumferential direction at regular angular intervals. In this embodiment, the rotor 41 includes 12 N poles and 12 S poles. The angle between adjacent N and S poles is 15 degrees.

The valve stem holder 42 has a cylindrical shape. The valve stem holder 42 is open at the lower end and is closed at the upper end. The valve stem holder 42 is fitted in a fitting hole 41a of the rotor 41. The valve stem holder 42 rotates together with the rotor 41. A movable stopper 42s is disposed at the lower part on the outer circumferential surface of the valve stem holder 42. The movable stopper 42s is a protrusion extending outward from the outer circumferential surface in the radial direction. The valve stem holder 42 has a stem hole 42b. The stem hole 42b is provided at an upper wall portion 42a of the valve stem holder 42. The second stem portion 32 of the valve member 30 is disposed in the stem hole 42b movably in the direction of the axis L. A washer 46 is disposed on the lower surface of the upper wall portion 42a of the valve stem holder 42. A valve closing spring 47 is disposed between the washer 46 and the step portion 34 of the valve member 30. The valve closing spring 47 is a coil spring and pushes the valve member 30 toward the valve seat 18. The inner circumferential surface of the valve stem holder 42 has an internal thread 42c. The movable stopper 42s is fixed with respect to the rotor 41.

The guide bush 43 includes a base portion 43a and a support portion 43b. The base portion 43a has a cylindrical shape. The support portion 43b has a cylindrical shape.
The outer circumferential surface of the base portion 43a has a planar surface 43d. The base portion 43a is press-fitted into the fitting hole 11a of the body member 11, and the planar surface 43d is in contact with the planar surface 11d of the fitting hole 11a. Consequently, the central axis of the body member 11 and the central axis of the guide bush 43 are aligned with the axis L, and the guide bush 43 is correctly positioned with respect to the body member 11 about the axis L. The outer diameter of the support portion 43b is smaller than the outer diameter of the base portion 43a. The inner diameter of the support portion 43b is equal to the inner diameter of the base portion 43a. The support portion 43b is coaxially connected to the upper end of the base portion 43a. The outer circumferential surface of the support portion 43b has an external thread 43c. The external thread 43c is screwed into the internal thread 42c of the valve stem holder 42. The first stem portion 31 of the valve member 30 is disposed in the guide bush 43. The guide bush 43 supports the valve member 30 movably in the direction of the axis L.

The stopper member 44 includes a stopper body 44a. The stopper body 44a has a cylindrical shape. The inner circumferential surface of the stopper body 44a has an internal thread 44c. A fixed stopper 44s is disposed on the outer circumferential surface of the stopper body 44a. The fixed stopper 44s is a protrusion extending outward from the outer circumferential surface in the radial direction. The internal thread 44c is screwed into the external thread 43c until the stopper body 44a comes into contact with the base portion 43a of the guide bush 43. This enables the stopper member 44 to be fixed to the guide bush 43. The fixed stopper 44s is fixed with respect to the valve body 10.

The fixed member 45 includes a fixed portion 45a and a flange portion 45b. The fixed portion 45a has a stepped cylindrical shape. The second stem portion 32 of the valve member 30 is disposed inside the fixed portion 45a. The fixed portion 45a is bonded to the second stem portion 32. The flange portion 45b is connected to the lower end of the fixed portion 45a. A return spring 48 is disposed around the fixed member 45. The return spring 48 is a coil spring.

As illustrated in Fig. 1, the stator unit 7 includes a stator 60, a housing 70, and a fitting tab 80.

The stator 60 has a cylindrical shape. The stator 60 includes an A-phase stator 61 and a B-phase stator 62.

The A-phase stator 61 includes a plurality of claw-pole-type pole teeth 61a and 61b in the inner circumference. The tip ends of the pole teeth 61a point downward, and the tip ends of the pole teeth 61b point upward. The pole teeth 61a and the pole teeth 61b are alternately arranged at regular angular intervals in the circumferential direction. In this embodiment, the A-phase stator 61 includes 12 pole teeth 61a and 12 pole teeth 61b. The angle between adjacent pole teeth 61a and 61b is 15 degrees. When a coil 61c of the A-phase stator 61 is energized, the pole teeth 61a and the pole teeth 61b have mutually opposite polarities.

The B-phase stator 62 includes a plurality of claw-pole-type pole teeth 62a and 62b in the inner circumference. The tip ends of the pole teeth 62a point downward, and the tip ends of the pole teeth 62b point upward. The pole teeth 62a and the pole teeth 62b are alternately arranged at regular angular intervals in the circumferential direction. In this embodiment, the B-phase stator 62 includes 12 pole teeth 62a and 12 pole teeth 62b. The angle between adjacent pole teeth 62a and 62b is 15 degrees. When a coil 62c of the B-phase stator 62 is energized, the pole teeth 62a and the pole teeth 62b have mutually opposite polarities.

The A-phase stator 61 and the B-phase stator 62 are coaxially disposed. The A-phase stator 61 is in contact with the B-phase stator 62. When viewed in the direction of the axis L, the angle between each of the pole teeth 61a of the A-phase stator 61 and a corresponding adjacent one of the pole teeth 62a of the B-phase stator 62 is 7.5 degrees. The B-phase stator 62 is at a position rotated about the axis L by 7.5 degrees with respect to the A-phase stator 61 from a position where the pole teeth 61a are aligned with the pole teeth 62a in the direction of the axis L. As illustrated in Fig. 4A, the coil 61c of the A-phase stator 61 includes terminals A1 and A2. The coil 62c of the B-phase stator 62 includes terminals B1 and B2. The terminals A1 and A2 and the terminals B1 and B2 are electrically connected to a motor driver (not illustrated).

The can 20 is disposed in the stator 60. The rotor 41 is disposed in the can 20. The stator 60 and the rotor 41 constitute a stepping motor 66. In this embodiment, the excitation mode of the stepping motor 66 is 1-2 phase excitation. The step angle θ of the stepping motor 66 is 3.75 degrees. The step angle θ is a rotational angle per pulse in the stepping motor 66.

When pulses P (P1 to P8) are input to the stepping motor 66, the rotor 41 rotates. Specifically, when drive currents according to the pulses P are supplied to the stator 60 of the stepping motor 66, the rotor 41 rotates. The expression "pulses P are input to the stepping motor 66" in this specification is synonymous with "drive currents according to the pulses P are supplied to the stator 60 of the stepping motor 66". Fig. 4B illustrates an example of the correspondence between pulses P1 to P8 and states of drive currents supplied to the stator 60 (hereinafter referred to as "excitation patterns"). In Fig. 4B, (+) indicates supply of the drive current flowing from the terminal A1 to the terminal A2 or supply of the drive current flowing from the terminal B1 to the terminal B2, (-) indicates supply of the drive current flowing from the terminal A2 to the terminal A1 or supply of the drive current flowing from the terminal B2 to the terminal B1, and (0) indicates that no drive current is supplied. In this embodiment, the number of the excitation patterns M is 8. Pulses P1 to P8 illustrated in Fig. 4B are input to the stepping motor 66 in order.

In rotating the rotor 41 in the first direction (clockwise in Fig. 3), pulses P are cyclically input to the stepping motor 66 in descending order (in the order from pulse P8 to pulse P1). When the rotor 41 rotates in the first direction, a screw-feed action between the internal thread 42c of the valve stem holder 42 and the external thread 43c of the guide bush 43 moves the rotor 41 and the valve stem holder 42 downward. The rotor 41 (valve stem holder 42) pushes the valve member 30 downward via the valve closing spring 47. The valve member 30 moves downward to bring the valve portion 33 into contact with the valve seat 18. The position of the rotor 41 at this time is a valve closing position Rc. When the rotor 41 at the valve closing position Rc further rotates in the first direction, the valve closing spring 47 is compressed, and the rotor 41 and the valve stem holder 42 move further downward. The valve member 30 does not move downward. When the movable stopper 42s of the valve stem holder 42 comes into contact with the fixed stopper 44s of the stopper member 44, the rotation of the rotor 41 in the first direction is restricted. The position of the rotor 41 at this time is a reference position Rx. The movable stopper 42s and the fixed stopper 44s are a stopper mechanism 49 that restricts the rotation of the rotor 41 in the first direction.

In rotating the rotor 41 in the second direction (counterclockwise in Fig. 3) opposite to the first direction, pulses P are cyclically input to the stepping motor 66 in ascending order (in the order from pulse P1 to pulse P8). When the rotor 41 rotates in the second direction, the screw-feed action between the internal thread 42c of the valve stem holder 42 and the external thread 43c of the guide bush 43 moves the rotor 41 and the valve stem holder 42 upward. The rotor 41 (valve stem holder 42) pushes the fixed member 45 upward. The valve member 30 moves upward together with the fixed member 45, and the valve member 30 separates from the valve seat 18.

The graph in Fig. 9 shows an example of the relationship between the number of pulses input to the stepping motor 66 and a flow rate of fluid flowing through the valve port 17 in the electric-operated valve 1. Positional relationships between the valve port 17 and the valve member 30 at some points on the graph are illustrated within circles of dashed lines in Fig. 9. In Fig. 9, the flow rate of fluid flowing through the valve port 17 (for example, a Cv value) is considered to be 100% when the rotor 41 is at a full-open position Rz in a predetermined flow rate measuring environment. In normal use of the electric-operated valve 1, the rotor 41 is positioned between the reference position Rx and the full-open position Rz. When the rotor 41 is at the reference position Rx, the seating portion 35 of the valve member 30 is in contact with the valve seat 18. The valve member 30 is farthest from the valve port 17 when the rotor 41 is at the full-open position Rz. The number of pulses input to the stepping motor 66 while the rotor 41 rotates from the reference position Rx to the full-open position Rz is a full-open pulse number Cz.

In the electric-operated valve 1, the position of the rotor 41 when the rotor 41 rotates from the reference position Rx in the second direction and the seating portion 35 of the valve member 30 separates from the valve seat 18 is a valve opening position Ro. When the rotor 41 is positioned at the valve opening position Ro, a minimum throttle passage 38 is formed between the orifice portion 17a of the valve port 17 and the lower end 36b of the intermediate portion 36. When the minimum throttle passage 38 is formed, the flow rate of the fluid flowing through the valve port 17 is at the minimum throttle flow rate. The inner diameter of the orifice portion 17a and the outer diameter of the lower end 36b of the intermediate portion 36 determine the minimum throttle flow rate.

The housing 70 is made of synthetic resin. The housing 70 is injection molded. The housing 70 houses the stator 60. The housing 70 includes a peripheral wall portion 71 and an upper wall portion 72.

The peripheral wall portion 71 has a cylindrical shape. The stator 60 is embedded in the peripheral wall portion 71. The upper wall portion 72 is connected to the upper end of the peripheral wall portion 71. The inner circumferential surface of the peripheral wall portion 71, the inner surface of the upper wall portion 72, and the inner circumferential surface of the stator 60 form an inner space 74 of the stator unit 7. The can 20 is disposed in the inner space 74.

The fitting tab 80 is a rectangular metal plate bent into a crank shape. One end portion of the fitting tab 80 is caulked to a conductive member 76 embedded in the lower part of the peripheral wall portion 71. The fitting tab 80 may be welded to the conductive member 76. The conductive member 76 is electrically connected to a yoke of the phase B stator 62. A projecting portion 81 protruding upward is provided at the other end portion of the fitting tab 80.
The projecting portion 81 is pressed to the lower surface of the fitting plate 23.

The projecting portion 81 is disposed in the hole 24 of the fitting plate 23. The tip end of the projecting portion 81 is fitted in the hole 24. When the tip end of the projecting portion 81 is fitted in the hole 24, the projecting portion 81 stays in the hole 24. This enables the stator unit 7 to be positioned with respect to the valve body assembly 5.

In the electric-operated valve 1, the respective central axes of the valve body 10 (the body member 11 and the connection member 13), the valve port 17, the can 20, the valve member 30, the rotor 41, the valve stem holder 42, the guide bush 43, and the stator 60 (the A-phase stator 61 and the B-phase stator 62) are aligned with the axis L. The arc center of the fitting plate 23 is also aligned with the axis L.

The electric-operated valves 1 are manufactured so that the flow rates of the fluid flowing through the valve ports 17 of the electric-operated valves 1 are equal when the numbers of pulses input to the stepping motors 66 of the electric-operated valves 1 are equal. However, depending on component accuracy or assembly accuracy, the flow rates of the fluid flowing through the valve ports 17 may vary among the electric-operated valves 1. The numbers of pulses input to the stepping motors 66 to rotate the rotors 41 from the reference position Rx to the valve opening position Ro (valve opening pulse numbers C) may also vary among the electric-operated valves 1. In the electric-operated valves 1, accumulations of dimensional and assembly variations of components cause tolerances. The tolerance range of the flow rate is the variation range of the flow rates in the electric-operated valves 1. The tolerance range of the valve opening pulse number C is the variation range of the valve opening pulse numbers C in the electric-operated valves 1. Fig. 10 illustrates a graph showing the tolerance range of the flow rate of the fluid flowing through the valve port 17 with respect to the number of pulses input to the stepping motor 66. In Fig. 10, a range from the lower-limit number Na to the upper-limit number Nb is the tolerance range of the valve opening pulse number C.

The tolerance range of the valve opening pulse number C represents a difference between the upper-limit number Nb and the lower-limit number Na of the tolerance range. A distance from the lower end 36b of the intermediate portion 36 to the upper end 17a1 of the orifice portion 17a in the direction of the axis L when the seating portion 35 is in contact with the valve seat 18 is a minimum throttle passage distance E. When D represents the tolerance range of the valve opening pulse number C in the electric-operated valve 1, the minimum throttle passage distance E is equal to a moving distance of the valve member 30 corresponding to D + 1 pulses P. In this specification, a moving distance of the valve member 30 corresponding to n pulses P is a moving distance of the valve member 30 when n pulses P are input to the stepping motor 66. That is, the minimum throttle passage distance E is equal to a moving distance of the valve member 30 when D + 1 pulses P are input to the stepping motor 66. For example, if 12 pulses represent the tolerance range of the valve opening pulse number C, the minimum throttle passage distance E is equal to a moving distance of the valve member 30 corresponding to 13 pulses P. It is only necessary for the minimum throttle passage distance E to be greater than or equal to the moving distance of the valve member 30 corresponding to D + 1 pulses P.

Preferably, the minimum throttle passage distance E is a moving distance of the valve member 30 corresponding to 1 to 15% of the full-open pulse number Cz. More preferably, the minimum throttle passage distance E is a moving distance of the valve member 30 corresponding to 5 to 15% of the full-open pulse number Cz. In this embodiment, the full-open pulse number Cz is 500. If the minimum throttle passage distance E is shorter than a moving distance of the valve member 30 corresponding to 1% of the full-open pulse number Cz, the tolerance range of the valve opening pulse number C should be reduced. Thus, the yield of the electric-operated valve 1 is reduced. If the minimum throttle passage distance E is greater than or equal to a moving distance of the valve member 30 corresponding to 5% of the full-open pulse number Cz, the yield of the electric-operated valve 1 can be effectively improved. If the minimum throttle passage distance E is greater than a moving distance of the valve member 30 corresponding to 15% of the full-open pulse number Cz, a section where the flow rate of the fluid flowing through the valve port 17 changes corresponding to the number of pulses input to the stepping motor 66 (section between N1 and N2 in Fig. 9) is small. Thus, the amount of flow rate change per pulse increases, and it is difficult to control the flow rate finely. If the minimum throttle passage distance E is shorter than or equal to the moving distance of the valve member 30 corresponding to 15% of the full-open pulse number Cz, it is possible to control the flow rate finely.

Next, an example of an initialization operation of the electric-operated valve 1 is described with reference to Fig. 6 to Fig. 8.

The electric-operated valve 1 is controlled by the electric-operated valve control unit (not illustrated). The electric-operated valve control unit inputs, in the initialization operation of the electric-operated valve 1, pulses P1 to P8 to the stepping motor 66 in descending order to rotate the rotor 41 in the first direction and position the rotor 41 at the reference position Rx.

Then, the electric-operated valve control unit inputs pulses P1 to P8 to the stepping motor 66 in ascending order to rotate the rotor 41 in the second direction.

The valve opening pulse number of the electric-operated valve 1 is represented by C, the lower-limit number of the tolerance range of the valve opening pulse number is represented by Na, the upper-limit number of the tolerance range of the valve opening pulse number is represented by Nb, and the tolerance range of the valve opening pulse number is represented by D (D = Nb - Na). In the electric-operated valve 1, when C pulses P are input to the stepping motor 66, the rotor 41 is positioned at the valve opening position Ro. Specifically, when the number of pulses input to the stepping motor 66 is from "0" to "C - 1", as illustrated in Fig. 6, the seating portion 35 is in contact with the valve seat 18. When the number of pulses input to the stepping motor 66 is "C", as illustrated in Fig. 7, the seating portion 35 separates from the valve seat 18. At this time, the minimum throttle passage 38 is formed between the orifice portion 17a and the lower end 36b of the intermediate portion 36, and the flow rate of the fluid flowing through the valve port 17 is at the minimum throttle flow rate. Fig. 6 is an enlarged view of a part of the circle denoted by VI in Fig. 9. Fig. 7 is an enlarged view of a part of the circle denoted by VII in Fig. 9.

When the number of pulses input to the stepping motor 66 is from "C" to "C + D", the minimum throttle passage 38 is maintained. When the number of pulses input to the stepping motor 66 is "C + D", as illustrated in Fig. 8, the lower end 36b of the intermediate portion 36 is at the same position as the upper end 17a1 of the orifice portion 17a in the direction of the axis L. Fig. 8 is an enlarged view of a part of the circle denoted by VIII in Fig. 9.

In other words, when the number of pulses input to the stepping motor 66 is "C - 1", the seating portion 35 is in contact with the valve seat 18. Then, when D + 1 pulses P are further input to the stepping motor 66, the valve member 30 moves upward by the minimum throttle passage distance E, and the lower end 36b of the intermediate portion 36 is at the same position as the upper end 17a1 of the orifice portion 17a in the direction of the axis L. At this time, the number of pulses input to the stepping motor 66 is "C - 1 + D + 1 = C + D".

When the number of pulses input to the stepping motor 66 is greater than "C + D", a passage with a passage area greater than that of the minimum throttle passage 38 is formed between the tip portion 37 and the orifice portion 17a, and the flow rate of the fluid flowing through the valve port 17 is greater than the minimum throttle flow rate.

For example, the electric-operated valve 1 with the relationship between the number of pulses and the flow rate of the fluid flowing through the valve port 17 shown by line G1 in Fig. 10 (former electric-operated valve 1) has the valve opening pulse number C which is equal to the upper-limit number Nb. In the electric-operated valve 1, when the number of pulses P input to the stepping motor 66 with the rotor 41 at the reference position Rx is from Nb to Nb + D, the minimum throttle passage 38 is formed. At this time, the flow rate of the fluid flowing through the valve port 17 is at the minimum throttle flow rate (lower-limit value Fa).

For example, the electric-operated valve 1 with the relationship between the number of pulses and the flow rate of the fluid flowing through the valve port 17 shown by line G2 in Fig. 10 (latter electric-operated valve 1) has the valve opening pulse number C which is equal to the lower-limit number Na. In the electric-operated valve 1, when the number of pulses P input to the stepping motor 66 with the rotor 41 at the reference position Rx is from Na to Na + D, the minimum throttle passage 38 is formed. At this time, the flow rate of the fluid flowing through the valve port 17 is at the minimum throttle flow rate (upper-limit value Fb).

In the former electric-operated valve 1, the number of pulses for forming the minimum throttle passage 38 is a number between Nb and Nb + D. In the latter electric-operated valve 1, the number of pulses for forming the minimum throttle passage 38 is a number between Na and Na + D. D represents the tolerance range of the valve opening pulse number C (D = Nb - Na). Thus, in the latter electric-operated valve 1, the number of pulses for forming the minimum throttle passage 38 is a number between Na and Nb.

As a result, in any of the electric-operated valves 1, each of which has the valve opening pulse number C within the tolerance range (between lower-limit number Na and upper-limit number Nb), when the number of pulses P input to the stepping motor 66 with the rotor at the reference position Rx in the initialization operation is the upper-limit number Nb, the minimum throttle passage 38 is formed in the valve port 17, and the flow rate of the fluid flowing through the valve port 17 is at the minimum throttle flow rate (between lower-limit value Fa and upper-limit value Fb). Thus, the effect of the tolerance of the valve opening pulse number C on the variation of the minimum throttle flow rates can be reduced, and the factor of the variation of the minimum throttle flow rates can be limited to the dimensions of the valve opening 17 (orifice portion 17a) and valve member 30 (lower end 36b of intermediate portion 36).

As described above, the electric-operated valve 1 according to this embodiment includes the valve body 10 including the valve port 17 and the valve seat 18, the stepping motor 66 including the rotor 41, the valve member 30 that moves toward the valve port 17 when the rotor 41 rotates in the first direction and moves away from the valve port 17 when the rotor 41 rotates in the second direction, and the stopper mechanism 49 that restricts the rotation of the rotor 41 in the first direction when the rotor 41 is at the reference position Rx. The valve port 17 includes the orifice portion 17a with the constant inner diameter.
The valve seat 18 is disposed around the upper end 17a1 of the orifice portion 17a. The valve member 30 includes the seating portion 35, the intermediate portion 36, and the tip portion 37. The upper end 36a of the intermediate portion 36 is connected to the seating portion 35. The lower end 36b of the intermediate portion 36 is connected to the tip portion 37. The outer diameter of the lower end 36b of the intermediate portion 36 is larger than the outer diameter of the tip portion 37. When the rotor 41 is at the reference position Rx, the seating portion 35 is in contact with the valve seat 18, and the lower end 36b of the intermediate portion 36 is in the valve port 17. The position of the rotor 41 when the rotor 41 rotates in the second direction and the seating portion 35 separates from the valve seat 18 is the valve opening position Ro. When the rotor 41 is at the valve opening position Ro, the minimum throttle passage 38 is formed between the lower end 36b of the intermediate portion 36 and the orifice portion 17a. When D represents the tolerance range of the valve opening pulse number C, the distance (minimum throttle passage distance E) between the lower end 36b of the intermediate portion 36 and an upper end 17a1 of the orifice portion 17a when the seating portion 35 is in contact with the valve seat 18 is equal to the moving distance of the valve member 30 corresponding to D + 1 pulses P.

As a result, in the electric-operated valve 1 with the valve opening pulse number C which is equal to the upper-limit number Nb of the tolerance range, when the number of pulses P input to the stepping motor 66 with the rotor 41 at the reference position Rx is between Nb and Nb + D, the minimum throttle passage 38 is formed. In the electric-operated valve 1 with the valve opening pulse number C which is equal to the lower-limit number Na of the tolerance range, when the number of pulses P input to the stepping motor 66 with the rotor 41 at the reference position Rx is between Na and Na + D, the minimum throttle passage 38 is formed. Since D represents the tolerance range (D = Nb - Na), Na + D = Nb holds. Thus, by using the valve opening pulse number C, which is equal to the upper-limit number Nb of the tolerance range, in the initialization operation of the electric-operated valves 1, the flow rate of the fluid flowing through the valve port 17 can be set to the minimum throttle flow rate in any of the electric-operated valves 1. Accordingly, in the electric-operated valves 1, the variation range of the minimum throttle flow rates can be decreased.

In the electric-operated valve 1, the intermediate portion 36 of the valve member 30 has the columnar shape with the constant outer diameter. The shape of the intermediate portion 36 is not limited to such a shape. As illustrated in Fig. 11, the valve member 30 may include an intermediate portion 36A with an annular groove with a section in a U shape on its outer circumferential surface. The annular groove is formed throughout the outer circumferential surface of the intermediate portion 36A in the circumferential direction. The annular groove may have a section in a V shape. Alternatively, as illustrated in Fig. 12, the valve member 30 may include an intermediate portion 36B including a portion 36c having a columnar shape with a constant outer diameter and a portion 36d with an annular groove on its outer circumferential surface. The valve member 30 may include an intermediate portion including multiple columnar portions and multiple portions with annular grooves which are alternately arranged in the direction of the axis L. Alternatively, as illustrated in Fig. 13, the valve member 30 may include an intermediate portion 36C including a portion 36e having a columnar shape with a constant outer diameter and a portion 36f having a tapered shape with an outer diameter increasing from the upper end to the lower end. In the valve member 30 in Fig. 13, the lower end of the seating portion 35 is in the valve port 17 when the seating portion 35 is in contact with the valve seat 18.

In the electric-operated valve 1, the intermediate portion 36 includes at least one portion in a columnar shape with a constant outer diameter. In the electric-operated valve 1, preferably, the intermediate portion 36 includes at least one portion with an annular groove on its outer circumferential surface. This enables the intermediate portion 36 to have a relatively simple shape.

In this specification, terms indicating shapes, such as "cylindrical" and "columnar", are also used for components and members substantially having the shapes indicated by the terms. For example, "a cylindrical member" includes a cylindrical member and a substantially cylindrical member.

The embodiment of the present invention is described above. The present invention, however, is not limited to the embodiment. Embodiments obtained by appropriately adding, removing, or modifying components according to the embodiment described above by a person skilled in the art, and an embodiment obtained by appropriately combining features of the embodiment are included in the scope of the present invention as long as they have the gist of the present invention.

## Claims

1. An electric-operated valve (1) comprising:
a valve body (10) including a valve port (17) and a valve seat (18);
a stepping motor (66) including a rotor (41);
a valve member (30) that moves toward the valve port (17) when the rotor (41) rotates in a first direction and moves away from the valve port (17) when the rotor (41) rotates in a second direction; and
a stopper mechanism (49) that restricts rotation of the rotor (41) in the first direction when the rotor (41) is at a reference position,
wherein the valve port (17) includes an orifice portion (17a) with a constant inner diameter,
wherein the valve seat (18) is disposed around one end of the orifice portion (17a),
wherein the valve member (30) includes a seating portion (35), an intermediate portion (36), and a tip portion (37),
wherein a first end of the intermediate portion (36) is connected to the seating portion (35),
wherein a second end of the intermediate portion (36) is connected to the tip portion (37),
wherein an outer diameter at the second end of the intermediate portion (36) is larger than an outer diameter of the tip portion (37),
wherein when the rotor (41) is at the reference position, the seating portion (35) is in contact with the valve seat (18), and the second end of the intermediate portion (36) is in the valve port (17),
wherein a valve opening position is a position of the rotor (41) when the rotor (41) rotates in the second direction and the seating portion (35) separates from the valve seat (18),
wherein when the rotor (41) is at the valve opening position, a minimum throttle passage (38) is formed between the second end of the intermediate portion (36) and the orifice portion (17a), and
wherein D represents a tolerance range of a number of pulses input to the stepping motor (66) while the rotor (41) rotates from the reference position to the valve opening position, and a distance between the second end of the intermediate portion (36) and the one end of the orifice portion (17a) when the seating portion (35) is in contact with the valve seat (18), the distance being a minimum throttle passage distance, is greater than or equal to a moving distance of the valve member (30) corresponding to D + 1 pulses.

2. The electric-operated valve (1) according to Claim 1, wherein the minimum throttle passage distance is a moving distance of the valve member (30) corresponding to 1 to 15% of a number of pulses input to the stepping motor (66) while the rotor (41) rotates from the reference position to a full-open position where the valve member (30) is farthest from the valve port (17).

3. The electric-operated valve (1) according to Claim 1 or 2, wherein the intermediate portion (36) includes at least one portion in a columnar shape with a constant outer diameter.

4. The electric-operated valve (1) according to Claim 1 or 2, wherein the intermediate portion (36) includes at least one portion with an annular groove on an outer circumferential surface of the intermediate portion (36).

5. The electric-operated valve (1) according to Claim 3, wherein the intermediate portion (36) includes at least one portion with an annular groove on the outer circumferential surface of the intermediate portion (36).
